# EUROPÄISCHE PATENTSCHRIFT

(11) **EP 4 331 076 B1**
(45) Veröffentlichungstag und Bekanntmachung des Hinweises auf die Patenterteilung: **25.12.2024**
(21) Anmeldenummer: 23739294.9
(22) Anmeldetag: 11.07.2023
(51) Int. Cl.: H02J 15/00, F42D 3/00

(54) **SPEICHERKRAFTWERK, INSBESONDERE DRUCKSPEICHERKRAFTWERK, SOWIE VERFAHREN ZUM BETRIEB EINES SPEICHERKRAFTWERKS**
STORAGE POWER PLANT, IN PARTICULAR PRESSURE STORAGE POWER PLANT, AND METHOD FOR OPERATING A STORAGE POWER PLANT
CENTRALE D'ACCUMULATION, NOTAMMENT CENTRALE D'ACCUMULATION DE PRESSION ET PROCÉDÉ DE FONCTIONNEMENT D'UNE CENTRALE D'ACCUMULATION

(30) Priorität: 22.11.2022 LU 503094; 22.02.2023 DE 102023104345
(43) Veröffentlichungstag der Anmeldung: 06.03.2024
(73) Patentinhaber: Pfaff, Christof, 66606 St. Wendel (DE)
(72) Erfinder: Pfaff, Christof, 66606 St. Wendel (DE)
(74) Vertreter: Zeiner, Johannes Michael
(86) Internationale Anmeldenummer: PCT/EP2023/069162
(87) Internationale Veröffentlichungsnummer: WO 2023/222929

(56) Entgegenhaltungen:
- WO-A1-2013/152748
- CN-A- 103 883 400
- CN-A- 111 425 295
- DE-A1- 102016 119 245
- TAO FENGBO ET AL: "Research on Explosion Characteristics of Prefabricated Cabin type Li-ion Battery Energy Storage", JOURNAL OF PHYSICS: CONFERENCE SERIES, INSTITUTE OF PHYSICS PUBLISHING, GB, vol. 2166, no. 1, 1 January 2022 (2022-01-01), XP020414063, ISSN: 1742-6588, [retrieved on 20220101], DOI: 10.1088/1742-6596/2166/1/012035

## Beschreibung

Die Erfindung betrifft ein Speicherkraftwerk, das eine Gasgeneratorkammer und eine mit der Gasgeneratorkammer fluidisch verbundene, mindestens einen Druckspeicher umfassende Druckspeichervorrichtung aufweist, wobei die Gasgeneratorkammer dazu eingerichtet ist, als Explosionskammer zu wirken, in der ein Betriebsstoff, mit dem das Speicherkraftwerk betrieben wird, zur Explosion gebracht wird, wobei wobei der mindestens eine Druckspeicher der Druckspeichervorrichtung zur Aufnahme eines in der Gasgeneratorkammer durch die Explosion des Betriebsstoffes erzeugten Explosionsgases eingerichtet ist. Ferner betrifft die Erfindung ein Verfahren zum Betrieb eines Speicherkraftwerks.

Aus dem Stand der Technik sind Speicherkraftwerke bekannt, die Energie in Form von Druckluft speichern und bei Bedarf zur Erzeugung von elektrischem Strom abrufen können. Dazu wird Luft in unterirdische Kavernen gepresst und bei Bedarf zum Betrieb einer Turbine zur Erzeugung von elektrischem Strom aus den Kavernen entnommen.

Aus US 2011/0283705 A1 ist eine Vorrichtung bekannt, bei der ein Kompressionskolben durch Detonation eines staubförmigen explosiven Gemischs oder eines Sprengstoffs antreibbar ist. Durch eine Bewegung des Kompressionskolbens durch die Detonation wird ein Kompressionsgas über eine Ventileinrichtung in einen Druckspeicher geleitet.

DE 958 788 C offenbart eine Startvorrichtung für eine Verbrennungsmaschine, bei der eine Pulverzündung einen Kompressor betreibt, der eine einer ersten Dieselzündung vorausgehende Verdichtung bewirkt.

DE 3821 304 C2 beschreibt eine Vorrichtung zur Verdichtung eines Metallpulvers zur Herstellung eines verdichteten Massivbauteils, die eine Explosionskammer mit einem bewegbaren Kompressionskolben aufweist. Der Kompressionskolben teilt die Explosionskammer in einen Explosionsraum und einen Kompressionsraum. In dem Kompressionsraum befindet sich ein Metallpulver, das zu dem verdichteten Massivbauteil komprimiert werden soll. Wird in dem Explosionsraum ein Sprengstoff gezündet, wird durch eine Bewegung des Kolbens der Kompressionsraum verkleinert und das Metallpulver verdichtet.

Druckspeicherkraftwerke sind aus DE 10 2016 119 245 A1, CN 111425295 A und CN 103883400 B bekannt.

Der Erfindung liegt die Aufgabe zugrunde, ein Speicherkraftwerk, insbesondere ein Druckspeicherkraftwerk, der eingangs genannten Art zu schaffen, das durch Explosionsgase, die bei Explosion eines Betriebsstoffes entstehen, betreibbar ist.

Erfindungsgemäß wird die Aufgabe dadurch gelöst, dass in der Gasgeneratorkammer ein Dämpfungsmittel angeordnet ist, das einen bewegbaren Kolben umfasst, durch dessen Bewegung ein Volumen der Gasgeneratorkammer veränderbar ist.

Der Kolben bildet dazu einen bewegbaren Wandabschnitt der Gasgeneratorkammer.

Durch eine Bewegung des Kolbens bei der Explosion des Betriebsstoffes kann eine auf Generatorkammerwände und Ventile wirkende Kraft reduziert werden.

Obwohl nicht unbedingt erforderlich, kann das Dämpfungsmittel ein Rückstellmittel aufweisen, das als mechanisches Rückstellmittel wie eine Schraubenfeder, oder als hydraulisches oder pneumatisches Rückstellmittel ausgebildet sein kann.

Es versteht sich, dass das Rückstellmittel vorgespannt sein kann, um eine Dämpfungswirkung einstellen zu können. Beispielsweise kann ein erfindungsgemäßes Speicherkraftwerk einen bewegbaren Kolben mit einer vorgespannten Schraubenfeder aufweisen.

Es ist denkbar, dass das Dämpfungsmittel mehrere Gewichtselemente aufweist, die auf einer der Gasgeneratorkammer abgewandten Seite eines Kolbens angeordnet sind. Diese Gewichtselemente können scheibenförmig oder ringförmig ausgebildet sein, wobei ein ringförmiges Gewichtselement ein scheibenförmiges Gewichtselement in Umfangsrichtung umgeben kann. Vertikal benachbarte Gewichtselemente bilden eine Gewichtselementkaskade, das heißt die Gewichtselemente sind kaskadenartig angeordnet.

Der Kolben kann bei einer Vergrößerung der Gasgeneratorkammer an die Gewichtselemente anliegen oder in Abstand von diesen angeordnet sein und diese bei einer Bewegung zur Vergrößerung der Gasgeneratorkammer in einer Richtung entgegen einer Wirkrichtung der Erdanziehungskraft bewegen. Vorteilhaft wird ein zusätzlicher Dämpfungseffekt erzielt. Außerdem ist eine Erzeugung eines besonders hohen Drucks möglich, wodurch der Wirkungsgrad ansteigt.

Weiter vorteilhaft ist ein kontrollierter Druckaufbau möglich.

Benachbarte Gewichtselemente können durch sich in radialer Richtung erstreckende Verbindungsstege miteinander verbunden sein.

Die Verbindungsstege treten durch schlitzartige Öffnungen in einer Wand hindurch, wobei die Wand als Führungsmittel für die Gewichtselemente wirkt.

Denkbar ist, dass Entlüftungsbahnen im Bereich der Verbindungsstege vorhanden sind, durch die zwischen vertikal benachbarten Gewichtselementen, bei Betrieb des erfindungsgemäßen Speicherkraftwerks komprimierte Luft hindurch entweichen kann.

Zwischen vertikal benachbarten und in Abstand voneinander angeordneten Gewichtselementen kann sich ein Dämpfungsmittel befinden, das zur Dämpfung eines Aufeinandertreffens der benachbarten Gewichtselemente beim Betrieb eines erfindungsgemäßen Speicherkraftwerks eingerichtet ist.

Das Dämpfungsmittel kann Anschlagplatten umfassen, die durch ein Rückstellmittel, das mehrere Schraubenfedern umfassen kann, miteinander verbunden sind.

Bei der Explosion des Betriebsstoffes, der beispielsweise ein Sprengstoff wie Schwarzpulver, Nitrozellulose oder C4 sein kann, entsteht ein unter hohem Druck stehendes Explosionsgas in der Gasgeneratorkammer, das zum Druckabbau aus dieser in den mindestens einen Druckspeicher geleitet und dort gespeichert werden kann. Der mindestens eine Druckspeicher kann ein einzelner Druckspeicherbehälter sein.

Denkbar ist, dass der mindestens eine Druckspeicher mehrere fluidisch parallel geschaltete Druckspeicherbehälter aufweist.

Vorteilhaft kann ein bei der Explosion entstehender Gasdruck unmittelbar genutzt werden, beispielsweise zum Betrieb einer Turbine zur Erzeugung von elektrischem Strom.

Weiter vorteilhaft wird kein Explosionsgas in die Umgebung des Speicherkraftwerks abgelassen, sondern zur Energiespeicherung verwendet. Dazu ist denkbar, dass das Explosionsgas gereinigt wird und nach Passieren einer Turbine, die mit dem Explosionsgas zur Stromerzeugung angetrieben wird, verdichtet und unterirdisch gespeichert wird. Es wird ein emissionsfreies Speicherkraftwerk geschaffen.

Eine Befüllung der Gasgeneratorkammer mit dem Betriebsstoff erfolgt vorzugsweise durch einen aus der Verwendung in Haubitzen bekannten, besonders druckfesten Schraubverschluss.

Weiter denkbar ist, dass das erzeugte Explosionsgas in der Art von Druckluft benutzt wird, um Maschinen oder ähnliche Vorrichtungen zu betreiben, beispielsweise einen Druckluftmotor.

Ein erfindungsgemäßes Verfahren zum Betrieb eines Speicherkraftwerks, insbesondere eines Druckspeicherkraftwerks, ist dadurch gekennzeichnet, dass durch einen Kolben eines Dämpfungsmittels eine plötzliche Druckzunahme in der Gasgeneratorkammer bei Explosion des Betriebsstoffes und einer daraus folgenden Erzeugung des Explosionsgases gedämpft wird.

Zweckmäßigerweise weist die Gasgeneratorkammer eine Ventileinrichtung mit mindestens einem Überdruckventil auf, durch die das bei der Explosion des Betriebsstoffes erzeugte Explosionsgas in den mindestens einen fluidisch mit der Gasgeneratorkammer verbundenen Druckspeicher der Druckspeichervorrichtung hindurchströmen kann. Ein Überdruckventil ist ein Ventil, welches bei Erreichen eines Grenzdrucks öffnet und bei Unterschreiten des Grenzdrucks schließt. Bei der Explosion des Betriebsstoffes entsteht in der Gasgeneratorkammer ein derart hoher Druck, dass das mindestens eine Überdruckventil öffnet, so dass durch die Explosion erzeugtes Explosionsgas in den mindestens einen Druckspeicher, der beispielsweise ein Druckspeicherbehälter oder eine unterirdische Kaverne sein kann, geleitet wird.

Denkbar ist, dass die Ventileinrichtung mehrere Ventile aufweist, die als Überdruckventile ausgebildet sind und die bei voneinander verschiedenen Grenzdrücken öffnen.

Denkbar ist außerdem, dass die Ventileinrichtung mehrere Überdruckventile aufweist, die in einer Umfangsrichtung der Gasgeneratorkammer, die zylindrisch ausgebildet sein kann, nebeneinander angeordnet sind, insbesondere äquidistant voneinander beabstandet. Vorteilhaft wird die Gasgeneratorkammer bei Explosion des Betriebsstoffs gleichmäßig belastet.

In einer Ausgestaltung der Erfindung weist die Gasgeneratorkammer eine Ventileinrichtung mit mindestens einem steuerbaren Ventil auf, dessen Ansteuerung mit der Explosion des Betriebsstoffes synchronisiert ist. Das Ventil wird geöffnet, sobald eine Explosion stattfindet und ein Druck in der Gasgeneratorkammer höher ist als in dem mindestens einen Druckspeicher der Druckspeichervorrichtung. Das steuerbare Ventil kann geschlossen werden, sobald ein bestimmter Druck in dem Druckspeicher oder der Gasgeneratorkammer erreicht ist. Vorteilhaft ist ein gesteuerter Druckaufbau in dem mindestens einen Druckspeicher möglich. Denkbar ist, dass die Ventileinrichtung mehrere Ventile aufweist, die in einer Umfangsrichtung der Gasgeneratorkammer, die zylindrisch ausgebildet sein kann, nebeneinander angeordnet sind, insbesondere äquidistant voneinander beabstandet. Vorteilhaft wird die Gasgeneratorkammer bei Explosion des Betriebsstoffs gleichmäßig belastet.

In einer weiteren Ausgestaltung der Erfindung ist der mindestens eine Druckspeicher der Druckspeichervorrichtung in einer Umfangsrichtung um die Gasgeneratorkammer herum angeordnet, vorzugsweise vollständig in der Umfangsrichtung. Vorteilhaft ist ein besonders kompakter Aufbau des Speicherkraftwerks möglich.

Der um die Gasgeneratorkammer herum angeordnete Druckspeicher kann als Druckspeicherbehälter ausgebildet sein und außerdem als Verstärkungsmittel wirken, das die Gasgeneratorkammer verstärkt. Vorteilhaft kann ein erfindungsgemäßes Speicherkraftwerk mit besonders hohen Explosionsdrücken betrieben werden.

In einer Ausgestaltung der Erfindung umfasst die Druckspeichervorrichtung mehrere in Reihe geschaltete Druckspeicher, wobei ein letzter Druckspeicher zur Entnahme von bei der Explosion des Betriebsstoffes erzeugten Gases eingerichtet ist.

Durch eine Anordnung von Druckspeichern in einer Kaskade kann von Druckspeicher zu Druckspeicher ein durch die Explosion erzeugter Druck reduziert werden, so dass der letzte Druckspeicher bei einem konstanten Druck gehalten wird, der beispielsweise zum kontinuierlichen Betrieb einer Turbine zur Stromerzeugung erforderlich ist.

Das erfindungsgemäße Speicherkraftwerk kann isobar und/oder adiabatisch betrieben werden.

Denkbar ist, dass der letzte Druckspeicher mehrere fluidisch parallel geschaltete Druckspeicherbehälter umfasst. Bei dieser Anordnung kann eine Entlüftung der Gasgeneratorkammer unmittelbar in einen der fluidisch parallel geschalteten Druckspeicherbehälter erfolgen. Vorteilhaft wird ein Speicherkraftwerk mit einem besonders hohen Wirkungsgrad geschaffen.

In einer weiteren Ausgestaltung der Erfindung umfasst die Druckspeichervorrichtung mehrere in Reihe geschaltete Druckspeicher, wobei eine Temperatur eines jeden der Druckspeicher einstellbar ist. Dazu kann der Druckspeicher in einem Wärmetauscherbad gelagert sein, das ein Wasserbad, ein Ölbad oder eine Salzschmelze sein kann. Durch Anpassung einer Wärmetauscherbadtemperatur ist eine Explosionsgastemperatur im Innern der Druckspeicher einstellbar.

Denkbar ist, dass ein Wärmeaustausch in das Wärmetauscherbad hinein stattfindet, das heißt dem Druckspeicher bei der Explosion des Betriebsstoffes Wärme entzogen wird, die zum Aufheizen eines Wärmespeichers benutzt wird, dessen gespeicherte Wärme bei Bedarf verwendbar ist. Vorteilhaft ist ein besonders effizienter Betrieb des Speicherkraftwerks möglich.

Zweckmäßigerweise weist das Speicherkraftwerk eine Wärmetauscheinrichtung auf, die zumindest einen Wärmetauscher umfasst, der um die Gasgeneratorkammer herum angeordnet ist. Bei der Explosion des Betriebsstoffes entstehende Wärme kann abgeführt werden. Eine thermische Belastung der Gasgeneratorkammer wird vorteilhaft erheblich reduziert.

In einer weiteren Ausgestaltung der Erfindung weist die Gasgeneratorkammer zumindest eine Durchgangsöffnung in einer Wand der Gasgeneratorkammer auf, die von dem Dämpfungsmittel in einer Grundstellung des Dämpfungsmittels überdeckt wird und in einer Arbeitsstellung des Dämpfungsmittels freiliegt. Das Dämpfungsmittel ist vorzugsweise bewegbar ausgebildet. Vorteilhaft wird ein Teil des bei der Explosion des Betriebsstoffes freiwerden Drucks dazu benutzt, um das Dämpfungsmittel aus der Grundstellung in die Arbeitsstellung derart zu bewegen, dass die zumindest eine Durchgangsöffnung zu einem Druckspeicher einer Druckspeichervorrichtung freigelegt werden. Weiter vorteilhaft sind keine Ventile erforderlich, ein Aufbau des Speicherkraftwerks wird vereinfacht.

Zweckmäßigerweise weist die Gasgeneratorkammer eine Entlüftungsleitung auf, die die Gasgeneratorkammer mit einem letzten Druckspeicher oder einem der letzten Druckspeicher einer Druckspeichervorrichtung, die mehrere in Reihe geschaltete Druckspeicher umfasst, verbindet. Vorteilhaft kann eine Entlüftung der Gasgeneratorkammer in den letzten oder einem der letzten Druckspeicher hinein erfolgen. Druckverluste werden dadurch minimiert.

Der letzte oder einer der letzten Druckspeicher kann mehrere fluidisch parallel geschaltete Druckspeicherbehälter umfassen, die sowohl aus einem diesem vorangeschalteten weiteren Druckspeicher befüllt werden als auch durch die Entlüftung der Gasgeneratorkammer.

Dazu sind Ventile der Druckspeicherbehälter einzeln ansteuerbar, so dass vor einer Befüllung mit Explosionsgas aus dem vorangeschschalteten Druckspeicher dieser zuerst mit Explosionsgas aus der Gasgeneratorkammer von deren Entlüftung befüllt wird. Weiter vorteilhaft wird durch eine solche Betriebsart eine kontinuierliche Entnahme von Explosionsgas aus dem mindestens einen oder dem letzten von mehreren Druckspeichern mit konstantem Druck sichergestellt.

In einer Ausgestaltung eines erfindungsgemäßen Verfahrens wird das durch die Explosion des Betriebsstoffes in der Gasgeneratorkammer erzeugte Explosionsgas durch mehrere in Reihe geschaltete Druckspeicher einer Druckspeichervorrichtung geleitet, wobei die in Reihe geschalteten Gasspeicher voneinander verschiedene Drücke aufweisen. Vorteilhaft kann durch eine derartige Anordnung von Druckbehältern in einer Kaskade ein kontinuierlicher Betrieb des Speicherkraftwerks sichergestellt werden, das heißt aus dem letzten der Druckspeicher mit konstantem Druck entnommen werden, obwohl durch das wiederholte Einbringen des zur Explosion vorgesehen Betriebsstoffes ein diskontinuierlicher Betrieb der Gasgeneratorkammer erfolgt.

Es kann vorgesehen sein, dass ein Innendruck der in Reihe geschalteten Druckspeicher von der Gasgeneratorkammer zu einer Turbine zu Stromerzeugung hin abnimmt.

In einer weiteren Ausgestaltung eines erfindungsgemäßen Verfahrens wird das durch die Explosion des Betriebsstoffes in der Gasgeneratorkammer erzeugte Explosionsgas aus einem letzten der Druckspeicher zum Betrieb einer Turbine zur Stromerzeugung entnommen. Denkbar ist, dass das erzeugte Explosionsgas vor dessen Zuführung zu der Turbine gereinigt wird.

In einer Ausgestaltung eines erfindungsgemäßen Verfahrens wird ein letzter Druckspeicher mehrerer in Reihe geschalteter Druckspeicher einer Druckspeichervorrichtung erwärmt. Vorteilhaft wird sichergestellt, dass eine Auslassdüse, durch die das erzeugte Explosionsgas entnommen und einer Turbine zugeführt wird, bei dessen Expansion zu keiner Vereisung der Düse führt.

Zweckmäßigerweise wird die Gasgeneratorkammer in den mindestens einen Druckspeicher hinein entlüftet.

In einer Ausgestaltung der Erfindung weist das Speicherkraftwerk eine zusätzliche Stromerzeugungseinrichtung auf, die durch eine Bewegung von Gewichtselementen mit oder entgegen einer Wirkrichtung der Schwerkraft betreibbar ist. Die Stromerzeugungseinrichtung kann ein Bewegungsmittel aufweisen, das zumindest eine Schubstange oder eine Zahnstange umfasst, deren lineare Bewegung in eine Drehbewegung einer Antriebswelle eines Stromerzeugungsgenerators umgewandelt wird. Dazu kann das Bewegungsmittel mit einem Kolben oder Gewichtselementen des Speicherkraftwerks gekoppelt sein. Vorteilhaft wird ein Wirkungsgrad des Speicherkraftwerks weiter erhöht.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Mehrere Ausführungsformen eines erfindungsgemäßen Speicherkraftwerks,
- Fig. 2: Mehrere weitere Ausführungsformen eines erfindungsgemäßen Speicherkraftwerks sowie Details,
- Fig. 3: eine weitere, besondere Ausführungsform eines erfindungsgemäßen Speicherkraftwerks,
- Fig. 4: Details einer weiteren Ausführungsform eines erfindungsgemäßen Speicherkraftwerks,
- Fig. 5: Details einer weiteren Ausführungsform eines erfindungsgemäßen Speicherkraftwerks,
- Fig. 6: Details einer weiteren, besonderen Ausführungsform eines erfindungsgemäßen Speicherkraftwerks,
- Fig. 7: Details einer besonderen Ausführungsform eines erfindungsgemäßen Speicherkraftwerks,
- Fig. 8: Details mehrerer weiterer besonderer Ausführungsformen eines erfindungsgemäßen Speicherkraftwerks.

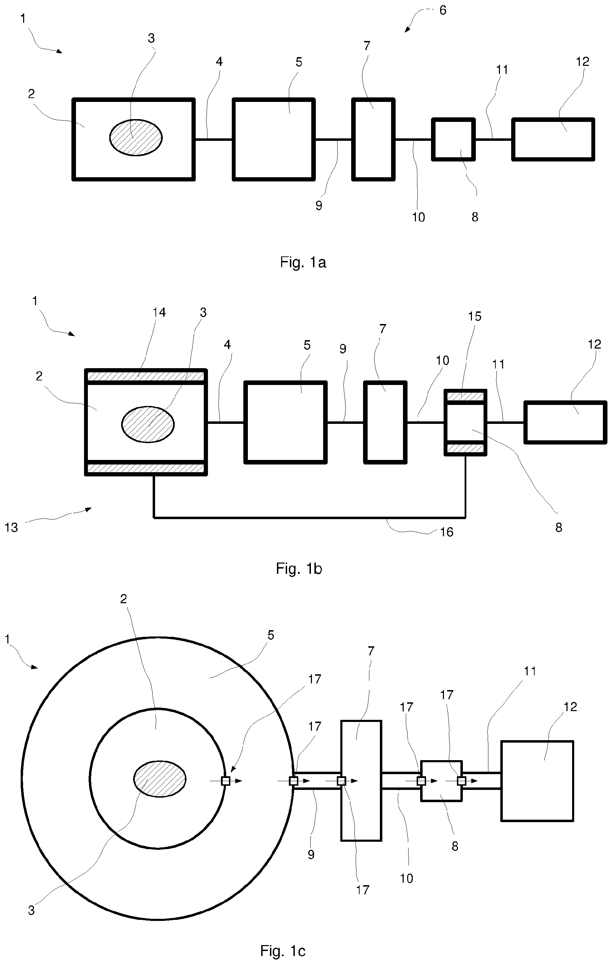

Ein in Fig. 1a in Seitenansicht schematisch gezeigtes Speicherkraftwerk 1 umfasst eine Gasgeneratorkammer 2, in der ein fester Betriebsstoff 3 zur Explosion gebracht werden kann. Die Gasgeneratorkammer 2 ist durch eine Verbindungsleitung 4 mit einem ersten Druckspeicherbehälter 5 einer Druckspeichervorrichtung 6 derart fluidisch verbunden, dass bei der Explosion erzeugtes Explosionsgas durch ein in Fig. 1a nicht gezeigtes Überdruckventil aus der Gasgeneratorkammer 2 in den Druckspeicherbehälter 5 einströmen kann.

Die Druckspeichervorrichtung 6 umfasst zwei weitere Druckspeicherbehälter 7, 8, wobei der erste Druckspeicherbehälter 5 durch eine Verbindungsleitung 9 mit dem zweiten Druckspeicherbehälter 7 fluidisch verbunden ist und dieser zweite durch eine Verbindungsleitung 10 mit dem dritten Druckspeicherbehälter 8. Der dritte Druckspeicherbehälter 8 weist ein fluidisches Verbindungsmittel 11 auf, das eine Gasaustrittsdüse umfassen kann, und durch das durch die Explosion erzeugtes Explosionsgas in Richtung einer Turbine 12 zu deren Betrieb strömen kann. Das Speicherkraftwerk 1 wird unmittelbar mit bei der Explosion des Betriebsstoffes 3 erzeugtem Explosionsgas betrieben.

Ein Innendruck in den Druckspeicherbehältern 5, 7, 8 nimmt vom ersten Druckspeicherbehälter 5 zum dritten, das heißt dem letzten, Druckspeicherbehälter 8 hin ab, so dass in dem letzten Druckspeicherbehälter 8 konstant derjenige Druck herrscht, der zum Betrieb der Turbine 12 erforderlich ist.

Es versteht sich, dass der erste und der zweite Druckspeicherbehälter 5, 7 außerdem in Fig. 1a nicht gezeigte Überdruckventile aufweisen, zumindest eines pro Druckspeicherbehälter 5, 7. Durch die Verwendung von Überdruckventilen kann bei der Explosion des Betriebsstoffes 3 in der Gasgeneratorkammer 2 erzeugtes Explosionsgas bei hinreichend hohem Druck in den jeweils nächsten Druckspeicherbehälter 5, 7, 8 der Druckspeichervorrichtung 6, in der die Druckspeicherbehälter 5, 7, 8 in einer Kaskade angeordnet sind, strömen.

Bei einem erfindungsgemäßen Verfahren zum Betrieb eines Speicherkraftwerks 1 wird der feste Betriebsstoff 3 in der Gasgeneratorkammer 2 zur Explosion gebracht. Dabei erfolgt eine plötzliche Volumenausdehnung in der Gasgeneratorkammer, insbesondere durch Änderung des Aggregatzustands des Betriebsstoffes von fest zu gasförmig. Dadurch steigt der Druck in der Gasgeneratorkammer 2, deren Volumen in diesem Ausführungsbeispiel konstant ist, plötzlich und erheblich an, so dass sich in der Gasgeneratorkammer 2 ein Überdruck aufbaut. Bei der Explosion erzeugtes, diesen Überdruck bewirkendes Explosionsgas kann durch das Überdruckventil aus der Gasgeneratorkammer 2 entweichen und durch die Verbindungsleitung 4 in den Druckspeicherbehälter 5 einströmen.

Dadurch, dass das Überdruckventil unterhalb eines Grenzdrucks in der Gasgeneratorkammer schließt, kann kein Explosionsgas aus dem Druckspeicherbehälter 5 in die Gasgeneratorkammer 2 zurückströmen.

Die weiteren Druckspeicherbehälter 7, 8 sind außerdem mit Überdruckventilen versehen, so dass die in diesem Ausführungsbeispiel in Reihe geschalteten drei Druckspeicherbehälter 5, 7, 8 eine Druckspeicherbehälterkaskade bilden, in der das bei der Explosion des festen Betriebsstoffes 3 erzeugte Explosionsgas nur in einer Richtung, das heißt in Richtung der Turbine 12 strömen kann. Die Größe der Druckspeicherbehälter 5, 7, 8 ist derart bemessen, dass in dem letzten Druckspeicherbehälter 8 der Kaskade bei Betrieb des Speicherkraftwerks ein konstanter Druck herrscht, der zum kontinuierlichen Betrieb der Turbine 12 nutzbar ist. Damit das Speicherkraftwerk 1 als solches kontinuierlich betreibbar ist, muss nach jeder Explosion in der Gasgeneratorkammer 2 und einer Entnahme des erzeugten Gases ein neuer fester Betriebsstoff 3 in die Gasgeneratorkammer 2 eingebracht und zur Explosion gebracht werden.

Es versteht sich, dass ggf. eine Entlüftung der Gasgeneratorkammer 2 erforderlich ist.

Trotz der diskontinuierlichen, nacheinander erfolgenden Explosionen von festen Betriebsstoffen 3, ist ein kontinuierlicher Betrieb des Speicherkraftwerks 1 aufgrund der Druckspeichervorrichtung 6 möglich.

Es versteht sich, dass ein erfindungsgemäßes Speicherkraftwerk 1 ein andere Anzahl an Druckspeicherbehältern aufweisen kann, beispielsweise nur einen oder zwei oder mehr als drei.

Ein in Fig. 1b in Seitenansicht schematisch gezeigtes Speicherkraftwerk 1 unterscheidet sich von demjenigen in Fig. 1a gezeigten dadurch, dass eine Wärmetauscheinrichtung 13 vorgesehen ist, die einen ersten Wärmetauscher 14 aufweist, der zum Austausch von Wärme mit der Gasgeneratorkammer 2 eingerichtet ist, und einen zweiten Wärmetauscher 15, der zum Erwärmen des dritten Druckspeicherbehälters 8 eingerichtet ist. Die beiden Wärmetauscher 14 und 15 sind durch eine Verbindungsleitung 16 fluidisch miteinander verbunden, so dass der Gasgeneratorkammer 2 entnommene Wärme nutzbar ist, um einen dritten Druckspeicherbehälter 8 aufzuwärmen. Vorteilhaft ist keine zusätzliche Erwärmung erforderlich, um aus dem Druckspeicherbehälter 8 ausströmendes Explosionsgas, welches ohne Erwärmung zu Vereisung führen könnte, zu erwärmen.

Die Wärmetauscheinrichtung 13 kann mit einem flüssigen Medium wie Wasser oder einem gasförmigen Medium wie Wasserdampf betrieben werden.

Obwohl in Fig. 1b nicht gezeigt, ist denkbar, dass der erste Wärmetauscher 14 oder der zweite Wärmetauscher 15 zur Versorgung eines Fern- oder Nahwärmenetzes oder zur Stromerzeugung durch Wärme oder zur Speicherung von Wärme eingerichtet ist.

Mit einem erfindungsgemäßen Speicherkraftwerk könnte neben Elektrizität vorteilhaft auch Wärme erzeugt werden.

Ein in Fig. 1c in einer geschnittenen Draufsicht schematisch gezeigtes Speicherkraftwerk 1 unterscheidet sich von demjenigen in Fig. 1a und 1b gezeigten dadurch, dass ein erster, in diesem Ausführungsbeispiel im Querschnitt zylindrischer Druckspeicherbehälter 5 in Umfangsrichtung um eine zylindrische Gasgeneratorkammer 2 herum angeordnet ist. Dabei ist der Druckspeicherbehälter 5 als Verstärkungsmittel vorgesehen, das die Gasgeneratorkammer 2 verstärkt. Dazu wirkt der Druckspeicherbehälter 5 in der Art einer die Gasgeneratorkammer 2 umgebenden Verstärkungsmanschette.

Ferner sind in Fig. 1c Überdruckventile 17 gezeigt, durch die das durch eine Explosion eines Betriebsstoffes 3 erzeugte Explosionsgas von der Gasgeneratorkammer 2 bis in einen dritten Druckspeicherbehälter 8 strömen kann.

Obwohl in keiner der Fig. 1a bis 1c gezeigt, ist denkbar, dass zumindest einer, zwei oder sämtliche der Druckspeicherbehälter 5-8 in einem Wärmetauscherbad angeordnet sind. Vorteilhaft ist eine Temperatur im Inneren der Druckspeicherbehälter 5-8 einstellbar.

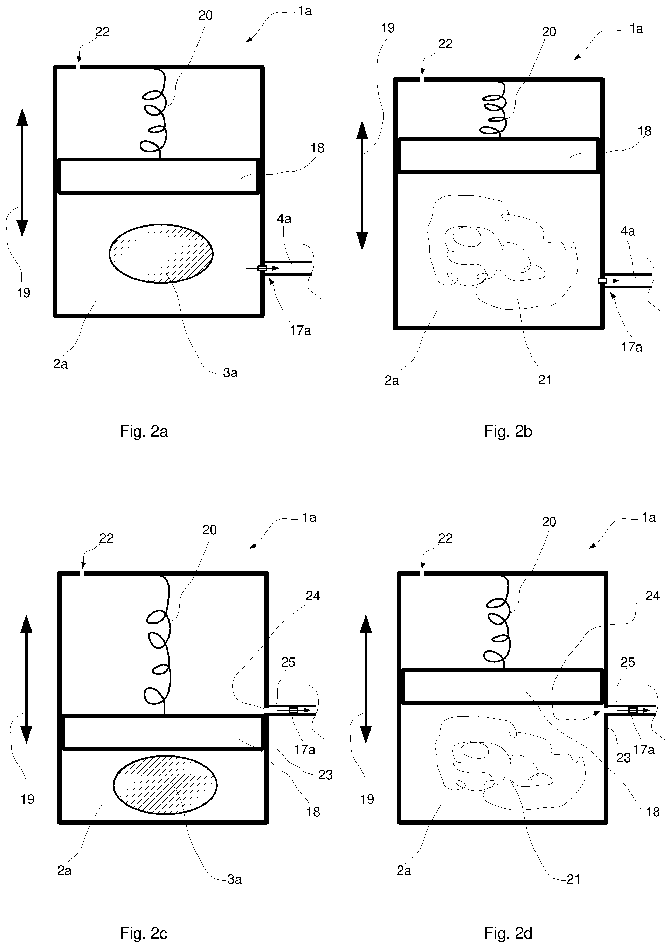

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2a und 2b ausschnittsweise in einer geschnittenen Seitenansicht schematisch gezeigtes Speicherkraftwerk 1a unterscheidet sich von demjenigen in Fig. 1 gezeigten dadurch, dass in einer Gasgeneratorkammer 2a ein entlang eines Doppelpfeils 19 bewegbarer Kolben 18 angeordnet ist, der aus einer in Fig. 2a gezeigten Grundstellung in eine in Fig. 2b gezeigte Arbeitsstellung entgegen einer Rückstellkraft eines in diesem Ausführungsbeispiel als Feder 20 ausgebildeten Rückstellmittels bewegbar ist.

Durch den Kolben 18 kann eine plötzliche Druckzunahme in der Gasgeneratorkammer 2a bei Explosion eines festen Betriebsstoffes 3 und einer daraus folgenden Erzeugung eines Explosionsgases 21 gedämpft werden. Vorteilhaft ist eine Belastung der Gasgeneratorkammer 2a und ein auf ein Überdruckventil 17a wirkender Druck geringer als ohne Verwendung eines den Kolben 18 umfassenden Dämpfungsmittels.

Zur Entlüftung eines Bereichs oberhalb des Kolbens 18 ist eine Entlüftungsöffnung 22 vorgesehen.

Ein in Fig. 2c und 2d ausschnittsweise in einer geschnittenen Seitenansicht schematisch gezeigtes Speicherkraftwerk 1a unterscheidet sich von demjenigen in Fig. 1, 2a und 2b gezeigten dadurch, dass durch eine Wand 23 einer Gasgeneratorkammer 2a eine Durchgangsleitung 24 hindurchgeführt ist, die die Gasgeneratorkammer 2a fluidisch mit einem Druckspeicherbehälter 5a verbindet, und die ein Überdruckventil 17a aufweist.

Eine Durchgangsöffnung 25 in der Gasgeneratorkammer 2a ist in einer in Fig. 2c gezeigten Grundstellung eines bewegbaren Kolbens 18 verdeckt und wird erst durch eine Bewegung des Kolbens 18 aus einer in Fig. 2c gezeigten Grundstellung in eine in Fig. 2d gezeigte Arbeitsstellung freigelegt, so dass ein bei einer Explosion eines Betriebsstoffes 3a erzeugtes Explosionsgas 21 durch die Durchgangsleitung 24 in den Druckspeicherbehälter 5a hindurchströmen kann. Hat ein Innendruck in der Gasgeneratorkammer 2a abgenommen, wird der Kolben 18 durch eine Rückstellkraft eines Rückstellmittels, in diesem Ausführungsbeispiel einer Feder 20, in die Grundstellung zurückbewegt und überdeckt die Durchgangsöffnung 25.

Bei dieser Ausführungsform ist ein besonders materialschonender Betrieb des Speicherkraftwerks 1a möglich.

Denkbar ist, dass die Feder 20, die vorzugsweise als Schraubenfeder ausgebildet ist, vorgespannt ist.

Es versteht sich, dass der Kolben 18 in einer in Fig. 2a und 2c gezeigten Grundstellung an einen in Fig. 2 nicht gezeigten Anschlag anliegen kann. Der Anschlag kann beispielsweise als ringförmiges Anschlagelement ausgebildet sein.

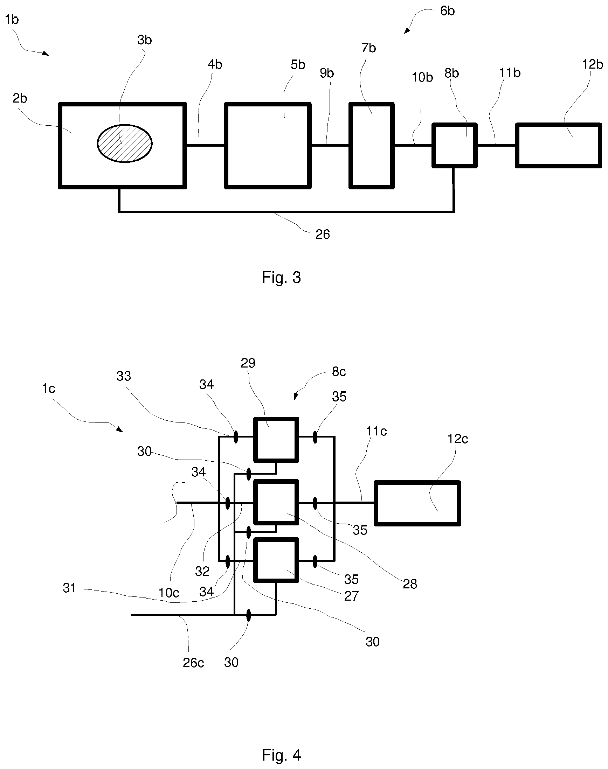

Es wird nun auf Fig. 3 Bezug genommen, wo gleiche oder gleichwirkende Teile mit derselben Bezugszahl wie in Fig. 1 und Fig. 2 bezeichnet sind und der betreffenden Bezugszahl jeweils der Buchstabe b beigefügt ist.

Ein in Fig. 3 gezeigtes Speicherkraftwerk 1b unterscheidet sich von demjenigen in Fig. 1 gezeigten dadurch, dass eine als Entlüftungsleitung vorgesehene Bypassleitung 26 vorgesehen ist, durch die bei einer Explosion eines Betriebsstoffes 3b erzeugtes heißes Explosionsgas aus einer Gasgeneratorkammer 2b entnehmbar ist, um unmittelbar einem dritten Druckspeicherbehälter 8b zugeführt zu werden. Vorteilhaft kann eine Temperatur des Gases in dem dritten Druckspeicherbehälter 8b eingestellt werden. Dadurch kann beispielsweise eine Vereisung einer Düse, aus der das Explosionsgas zum Betrieb einer Turbine entnommen wird, verhindert werden.

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe c beigefügt ist.

Ein in Fig. 4 im Detail schematisch gezeigter letzter Druckspeicher 8c eines Druckspeicherkraftwerks 1c mit mehreren Druckspeichern weist insgesamt drei Druckspeicherbehälter 27-29 auf, die in Parallelschaltung angeordnet sind, und die durch eine Bypassleitung 26c mit einer in Fig. 4 nicht gezeigten Gasgeneratorkammer verbunden sind.

Durch die Bypassleitung 26c kann die Gasgeneratorkammer in die Druckspeicherbehälter 27-29 hinein entlüftet werden. In der Bypassleitung 26c befindet sich vor jedem der Druckspeicherbehälter 27-29 ein Ventil 30, durch das ein Zustrom in den jeweiligen Druckspeicherbehälter 27-29 regelbar ist.

Eine Verbindungsleitung 10c, durch die erzeugtes Explosionsgas aus einem vorangehenden Gasspeicher in die Gasspeicherbehälter 27-29 einströmen kann, teilt sich in drei Abschnitte 31-33 auf, die jeweils ein steuerbares Ventil 34 aufweisen.

Aus den Gasdruckspeicherbehältern 27-29 kann Explosionsgas in Richtung eines fluidischen Verbindunsgmittels 11c geregelt durch Ventile 35 aus den Gasdruckbehältern 27-29 herausströmen.

Denkbar ist, dass ein Druckspeicher 8c anstelle mehrerer Druckspeicherbehälter 27-29 lediglich einen einzigen Druckspeicherbehälter umfasst, der mehrere Druckspeicherkammern aufweist.

Obwohl in Fig. 4 nicht gezeigt, ist denkbar, dass die Bypassleitung 26c einen Verdichter aufweist, durch den das erzeugte Explosionsgas verdichtet werden kann.

Außerdem ist denkbar, dass ein durch einen Verdichter verdichtetes Explosionsgas, das von einer Entlüftung der Gasgeneratorkammer stammt, unmittelbar zu einer Turbine geleitet wird.

Ferner ist denkbar, dass nach einer Explosion des Betriebsstoffs Restgas aus der Gasgeneratorkammer abgesaugt und in einen weiteren Druckspeicherbehälter geleitet wird. Die Gasgeneratorkammer kann danach mit Frischluft geflutet werden. Vorteilhaft wird kein erzeugtes Explosionsgas an die Umgebung abgegeben.

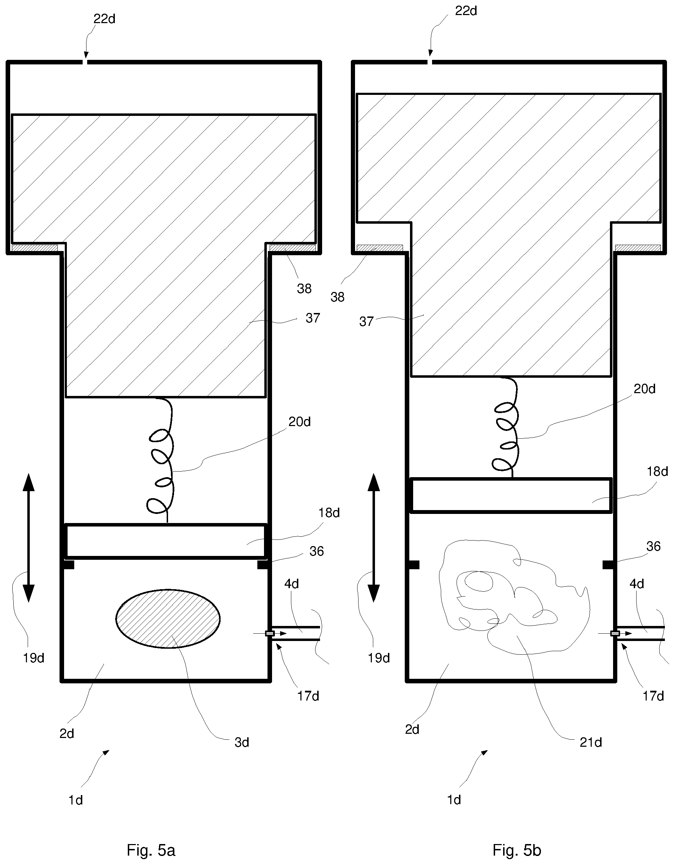

Es wird nun auf Fig. 5 Bezug genommen, wo gleiche oder gleichwirkende Teile mit derselben Bezugszahl wie in Fig. 1 bis 4 bezeichnet sind und der betreffenden Bezugszahl jeweils der Buchstabe d beigefügt ist.

Ein in Fig. 5a und 5b ausschnittsweise in einer geschnittenen Seitenansicht schematisch gezeigtes Speicherkraftwerk 1d unterscheidet sich von demjenigen in Fig. 2 gezeigten dadurch, dass ein entlang eines Doppelpfeils 19d bewegbarer Kolben 18d in einer in Fig. 5a gezeigten Kolbengrundstellung an einen umlaufenden Anschlagring 36 anliegt und durch eine als Rückstellmittel ausgebildete Feder 20 mit einem zusätzlichen Gewichtselement 37 verbunden ist, das in der in Fig. 5a gezeigten Kolbengrundstellung an ein ringförmiges Rückschlagdämpfelement 38 anliegt.

Durch den Kolben 18d kann eine plötzliche Druckzunahme in der Gasgeneratorkammer 2d bei Explosion eines festen Betriebsstoffes 3d wie in Fig. 5b gezeigt und einer daraus folgenden Erzeugung eines Explosionsgases 21d gedämpft werden.

Vorteilhaft wird ein zusätzlicher Dämpfungseffekt erzielt. Außerdem ist eine Erzeugung eines besonders hohen Drucks möglich, wodurch der Wirkungsgrad ansteigt.

Denkbar ist, dass anstelle einer Entlüftungsöffnung 22d eine Öffnung vorgesehen ist, durch die das zusätzliche Gewichtselement 27 in einem Notfall hinausgestoßen werden kann.

Denkbar ist außerdem, dass ein weiteres Dämpfungsmittel oberhalb des zusätzlichen Gewichtselement 37 vorgesehen ist, das eine Aufwärtsbewegung des Gewichtselements 37 dämpfen kann.

Ferner ist denkbar, dass statt einer Feder 20d ein starres Verbindungsmittel verwendet wird.

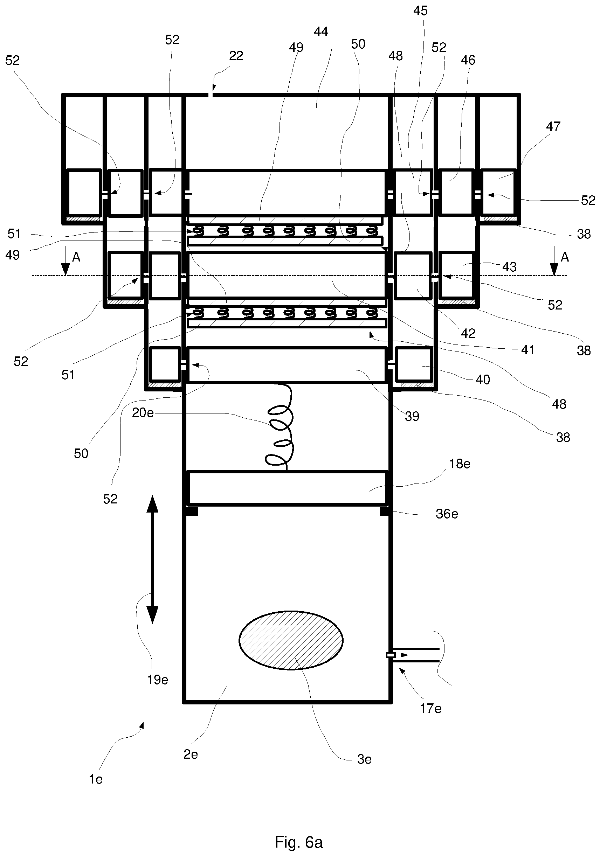

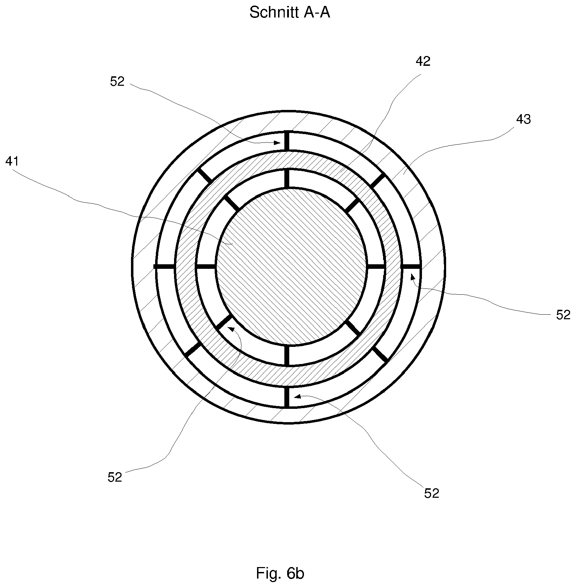

Es wird nun auf Fig. 6 Bezug genommen, wo gleiche oder gleichwirkende Teile mit derselben Bezugszahl wie in Fig. 1 bis 5 bezeichnet sind und der betreffenden Bezugszahl jeweils der Buchstabe e beigefügt ist.

Ein in Fig. 6a ausschnittsweise in einer geschnittenen Seitenansicht schematisch gezeigtes Speicherkraftwerk 1e unterscheidet sich von demjenigen in Fig. 2 und Fig. 5 gezeigten dadurch, dass ein entlang eines Doppelpfeils 19e bewegbarer Kolben 18e in einer in Fig. 5a gezeigten Kolbengrundstellung an einen umlaufenden Anschlagring 36e anliegt und durch eine als Rückstellmittel ausgebildete Feder 20e mit einem zusätzlichen scheibenförmigen Gewichtselement 39 verbunden ist, das in diesem Ausführungsbeispiel von einem ringförmigen Gewichtselement 40 umgeben ist und das unterhalb weiterer Gewichtselemente 42-47, die eine vertikale Gewichtselementkaskade bilden, angeordnet ist.

Die Gewichtselemente 39, 41, 44 sind scheibenförmig ausgebildet, während die Gewichtselemente 40, 42, 43, 45-47 ringförmig ausgebildet sind.

Die ringförmigen Gewichtselemente 42, 43 umgeben das scheibenförmige Gewichtselement 41 in Umfangsrichtung, während die ringförmigen Gewichtselemente 45-47 das scheibenförmige Gewichtselement 44 in Umfangsrichtung umgeben.

Unterhalb eines jeden der scheibenförmigen Gewichtselemente 41, 44 befindet sich ein Dämpfungsmittel 48, das durch eine erste Anschlagplatte 49 mit dem Gewichtselement 41, 44 an dessen Unterseite verbunden ist. Eine zweite Anschlagplatte 50 ist zur Anlage an das jeweils darunterliegende scheibenförmige Gewichtselement 39, 41 bei dessen Aufwärtsbewegung in Richtung eines Pfeils 19e vorgesehen. Zwischen den beiden Anschlagplatten 49, 50 befinden sich als dämpfendes Rückstellmittel insgesamt neun Schraubenfedern 51.

Die Gewichtselemente einer Ebene der Gewichtselementkaskade sind jeweils durch insgesamt acht Verbindungsstege 52, die durch eine schlitzartige, vertikale Öffnung in einer nicht mit einem Bezugszeichen versehenen Wand hindurchgeführt sind, miteinander verbunden. Dies ist in Fig. 6b, die eine geschnittene Draufsicht auf die Gewichtselementkaskade gemäß Schnitt A-A aus Fig. 6a zeigt, dargestellt.

Aus Gründen der Übersichtlichkeit sind in Fig. 6a und 6b nicht alle Verbindungsstege mit einem Bezugszeichen versehen.

Der Erfinder hat erkannt, dass durch eine derartige Gewichtselementkaskade ein eine Gasgeneratorkammer 2e schonender Betrieb möglich ist.

Es ist denkbar, dass statt einer Feder 20e ein starres Verbindungsmittel verwendet wird.

Eine Absinkgeschwindigkeit der Gewichtselemente kann über ein in Fig. 6 nicht gezeigtes, regelbares Entlüftungsventil der Gasgeneratorkammer 2e geregelt werden.

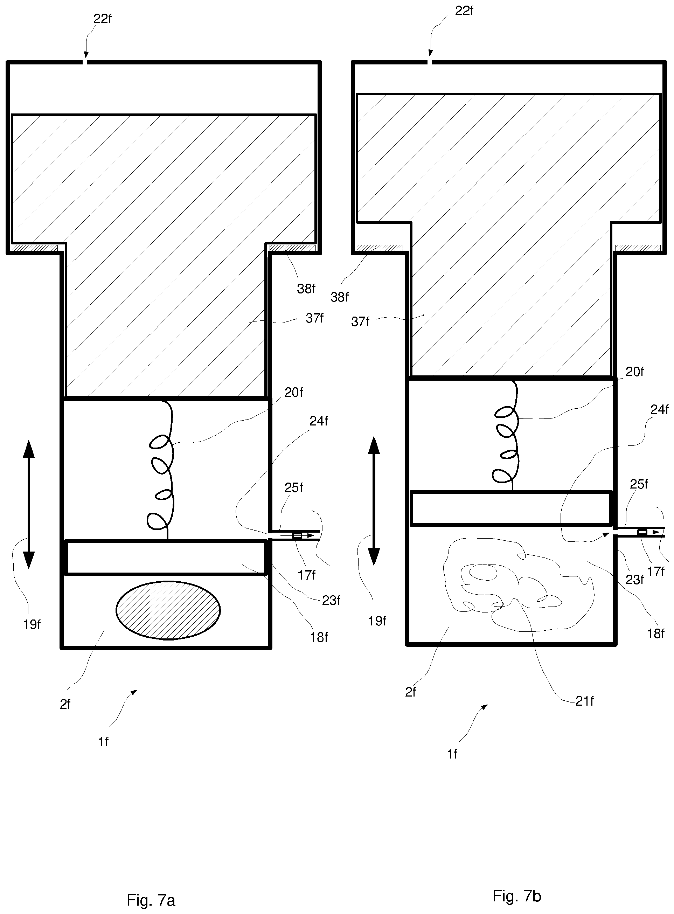

Es wird nun auf Fig. 7 Bezug genommen, wo gleiche oder gleichwirkende Teile mit derselben Bezugszahl wie in Fig. 1 bis 6 bezeichnet sind und der betreffenden Bezugszahl jeweils der Buchstabe f beigefügt ist.

Ein in Fig. 7 ausschnittsweise in einer geschnittenen Seitenansicht schematisch gezeigtes Speicherkraftwerk 1f unterscheidet sich von demjenigen in Fig. 5 gezeigten dadurch, dass durch eine Wand 23f einer Gasgeneratorkammer 2f eine Durchgangsleitung 24f hindurchgeführt ist, die die Gasgeneratorkammer 2f fluidisch mit einem Druckspeicherbehälter verbindet, und die ein Überdruckventil 17f aufweist.

Es ist denkbar, dass statt einer Feder 20f ein starres Verbindungsmittel verwendet wird.

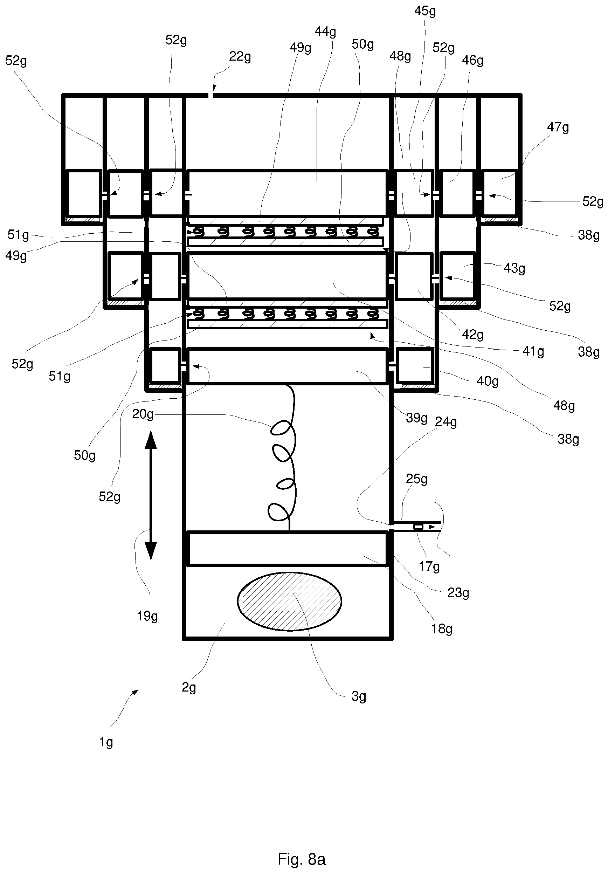

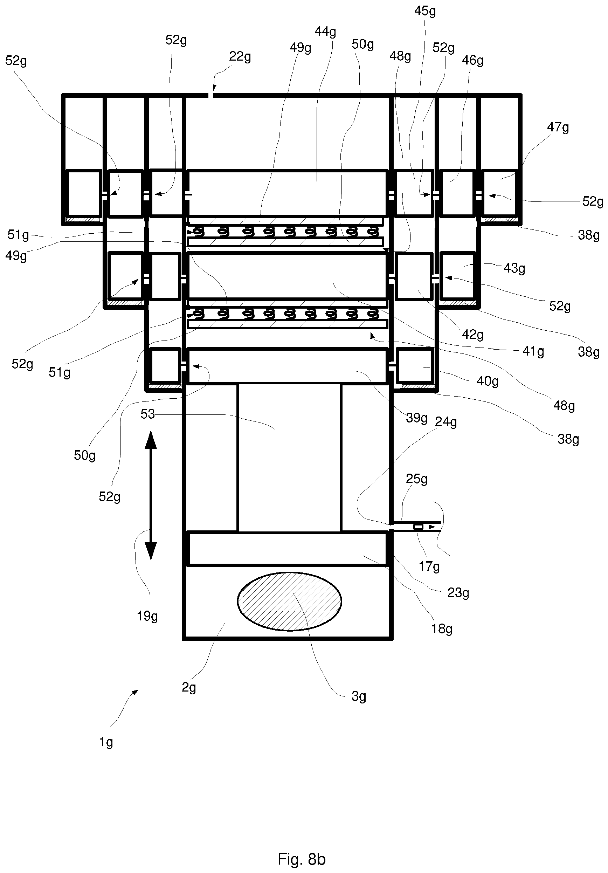

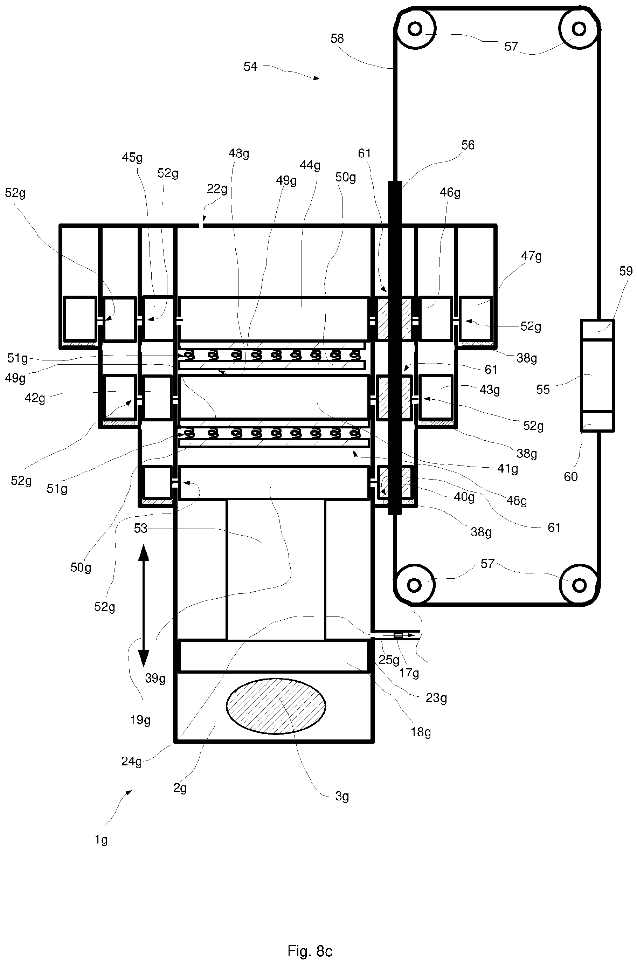

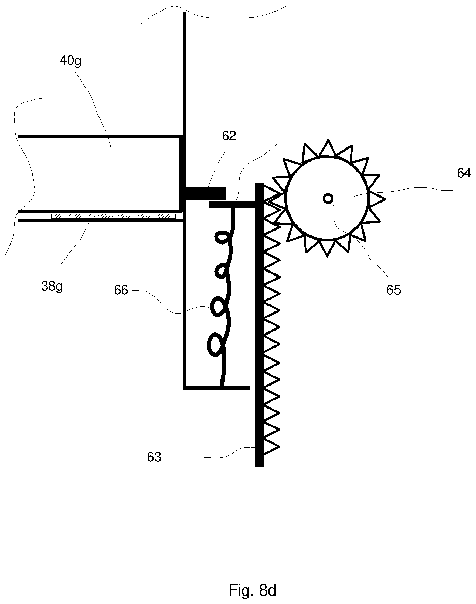

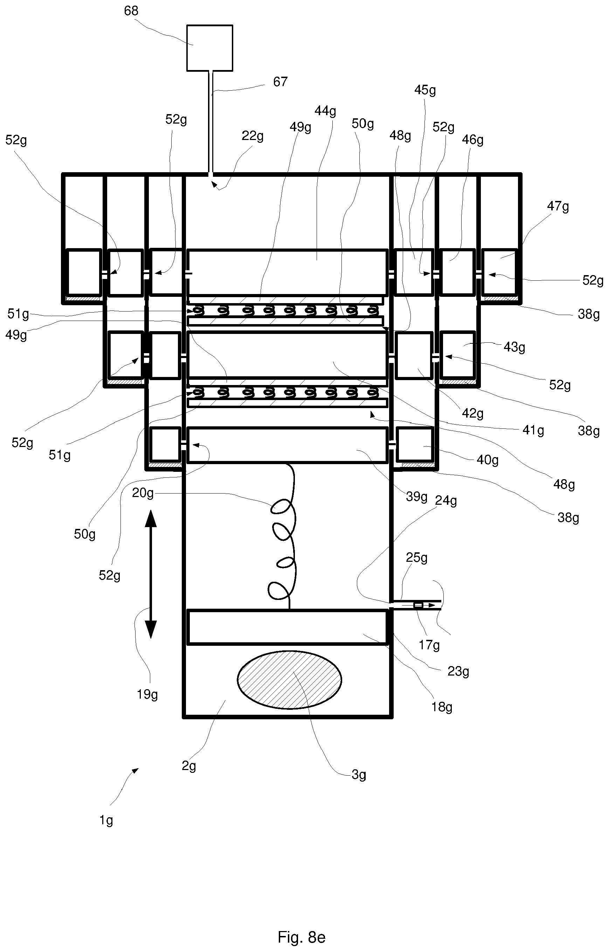

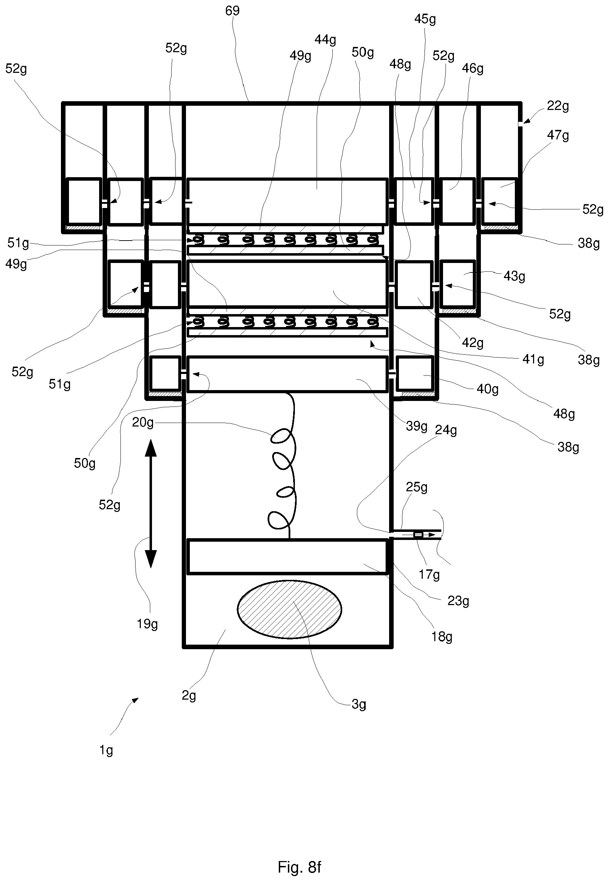

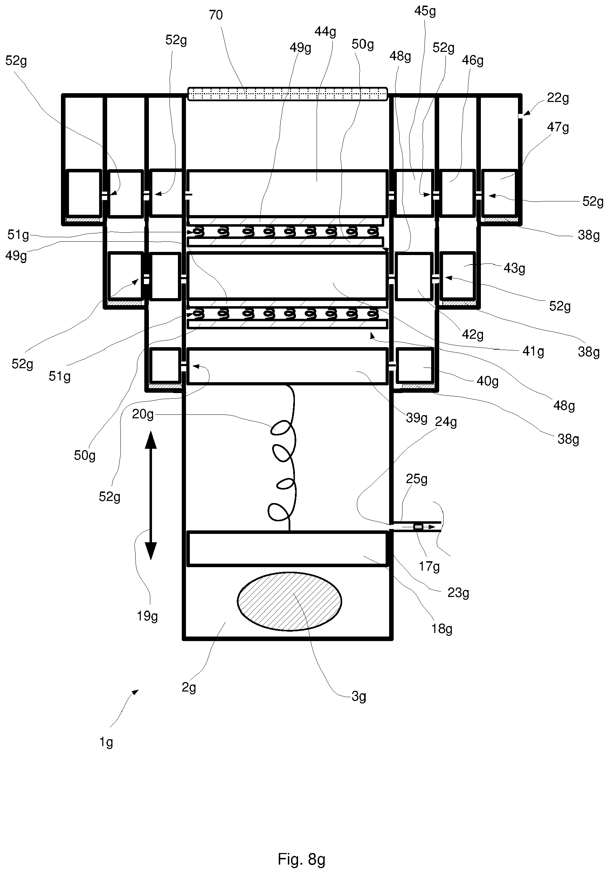

Es wird nun auf Fig. 8 Bezug genommen, wo gleiche oder gleichwirkende Teile mit derselben Bezugszahl wie in Fig. 1 bis 7 bezeichnet sind und der betreffenden Bezugszahl jeweils der Buchstabe g beigefügt ist.

Ein in Fig. 8a ausschnittsweise in einer geschnittenen Seitenansicht schematisch gezeigtes Speicherkraftwerk 1g unterscheidet sich von demjenigen in Fig. 6 gezeigten dadurch, dass durch eine Wand 23g einer Gasgeneratorkammer 2g eine Durchgangsleitung 24g hindurchgeführt ist, die die Gasgeneratorkammer 2g fluidisch mit einem Druckspeicherbehälter verbindet, und die ein Überdruckventil 17g aufweist.

Ein in Fig. 8b ausschnittsweise in einer geschnittenen Seitenansicht schematisch gezeigtes Speicherkraftwerk 1g unterscheidet sich von demjenigen in Fig. 8a gezeigten dadurch, dass anstelle eines Rückstellmittels ein starres, zylindrisches Verbindungselement 53 zwischen einem Kolben 18g und einem Gewichtselement 39g vorgesehen ist.

Ein Durchmesser des Verbindungselements 53 ist in diesem Ausführungsbeispiels halb so groß wie ein Durchmesser des Gewichtselements 39g.

Es versteht sich, dass der Durchmesser des Verbindungselements 53 größer oder kleiner als in diesem Ausführungsbeispiel sein kann.

Ein in Fig. 8c ausschnittsweise in einer geschnittenen Seitenansicht schematisch gezeigtes Speicherkraftwerk 1g unterscheidet sich von denjenigen in Fig. 6a, 8a und 8b gezeigten dadurch, dass das Speicherkraftwerk 1g eine Einrichtung 54 zum Betrieb eines Stromerzeugungsgenerators 55 umfasst, die eine Schubstange 56 sowie ein mit der Schubstange 56 verbundenes, über Umlenkrollen 57 geführtes Drahtseil 58 aufweist. Das Drahtseil 58 ist an einem oberen und unteren Ende der Schubstange 56 mit der Schubstange 56 verbunden und kann durch zwei Drahtseiltrommeln 59, 60, die auf gegenüberliegenden Seiten des Generators angeordnet sind, auf- und abgewickelt werden. Durch ein Auf- und Abwickeln treiben die Drahtseiltrommeln 59, 60 den Generator 55 an, wozu die Drahtseiltrommeln 59, 60 jeweils ein in Fig. 8c nicht gezeigtes Getriebe aufweisen können.

Die Schubstange 56 ist an dem unteren Ende mit einem Gewichtselement 40g verbunden, beispielsweise darin eingeschraubt oder eingeschweißt, und durch Durchtrittskanäle 61 in den Gewichtselementen 40g, 42g, 45g und durch ein Rückschlagdämpfelement 38g hindurchgeführt und außerdem durch eine nicht mit einem Bezugszeichen versehene Öffnung in einem Gehäuse des Speicherkraftwerks 1g hinausgeführt wird.

Erfolgt durch eine Explosion in einer Gasgeneratorkammer 2g eine Bewegung eines Kolbens 18g nach oben, das heißt in Richtung eines Pfeils 19g, wird die Schubstange 56 durch das Gewichtselement 40g mitgenommen. Bei dieser Mitnehmbewegung wird das über die Umlenkrollen geführte Drahtseil 58 von der Drahtseiltrommel 60 abgewickelt, wodurch der Generator 55 zur Stromerzeugung betrieben wird und gleichzeitig die Drahtseiltrommel 59 zum Aufwickeln des Drahtseils 58 synchron zur Drahtseiltrommel 60 betrieben wird.

Beim Absinken des Kolbens 18g erfolgt die Mitnehmbewegung der Schubstange 56 und des Drahtseils 58 in umgekehrter Richtung.

Damit keine Verkippung des Gewichtselements 40g auftritt, können mehrere Schubstangenanordnungen vorgesehen sein, die in einer Umfangsrichtung des Speicherkraftwerks 1g nebeneinander angeordnet sind, beispielsweise drei Schubstangenanordnungen in einem Winkel von 120 Grad zueinander.

Denkbar ist außerdem, dass für mehrere Schubstangenanordnungen ein einziger Generator vorgesehen ist, wobei die Drahtseile der jeweiligen Schubstangenanordnung durch Umlenkrollen zu jeweiligen der Schubstangenanordnung zugeordneten Drahtseiltrommeln im Bereich des Generators geführt werden können.

Ein in Fig. 8d in einer geschnittenen Seitenansicht im Ausschnitt schematisch gezeigtes Speicherkraftwerk 1g unterscheidet sich von denjenigen in Fig. 6a, 8a bis 8c gezeigten dadurch, dass an ein Gewichtselement 40g ein durch eine Wand hindurchgeführter Bolzen 62 einstückig angeformt ist, durch den eine Zahnstange 63, die ein Zahnrad 64, das durch eine Welle 65 mit einem in Fig. 8d nicht gezeigten Stromerzeugungsgenerator verbunden ist, entgegen einer Rückstellkraft eines in diesem Ausführungsbeispiel als Feder ausgebildeten Rückstellmittels 66 in einer in Fig. 8d gezeigten Ruhestellung gehalten wird.

Bei einer Bewegung des Gewichtselements 40g aus der in Fig. 8d gezeigten Ruhestellung wird die Zahnstange 63 durch die Rückstellkraft der Feder 66 nach oben bewegt, wodurch das Zahnrad 64 gedreht wird und den Stromerzeugungsgenerator über die Welle 65 antreibt. Beim Absinken des Gewichtselements 40g wird die Zahnstange 63 entgegen der Rückstellkraft der Feder 66 in die in Fig. 8d gezeigte Ruhestellung zurückbewegt, wodurch eine erneute Drehung des Zahnrads 64 zur Stromerzeugung herangezogen werden kann.

Damit keine Verkippung des Gewichtselements 40g auftritt, können mehrere Zahnstangenanordnungen vorgesehen sein, die in einer Umfangsrichtung des Speicherkraftwerks 1g nebeneinander angeordnet sind, beispielsweise drei Zahnstangenanordnungen in einem Winkel von 120 Grad zueinander.

Es versteht sich, dass die Zahnstange 63 geführt sein muss.

Denkbar ist, dass die Zahnstangenanordnung umfassend die Zahnstange 63, das Zahnrad 64, die Welle 65 und den in Fig. 8d nicht gezeigten Stromerzeugungsgenerator in einem separaten Gehäuse angeordnet ist.

Denkbar ist außerdem, dass ein Bolzen 62 zum Antrieb eines Spindelgetriebes benutztwird, durch das ein Stromerzeugungsgenerator betrieben wird.

Ein in Fig. 8e ausschnittsweise in einer geschnittenen Seitenansicht schematisch gezeigtes Speicherkraftwerk 1g unterscheidet sich von denjenigen in Fig. 6a, 8a bis 8d gezeigten dadurch, dass das Speicherkraftwerk 1g eine Entlüftungsöffnung 22g aufweist, an die eine Entlüftungsleitung 67 angeschlossen ist, durch die hindurch eine Entlüftung zum Betrieb eines Stromgenerators 68 erfolgen kann.

Vorteilhaft kann ein noch höherer Wirkungsgrad erreicht werden.

Ein in Fig. 8f ausschnittsweise in einer geschnittenen Seitenansicht schematisch gezeigtes Speicherkraftwerk 1g unterscheidet sich von denjenigen in Fig. 6a, 8a bis 8e gezeigten dadurch, dass das Speicherkraftwerk 1g eine seitliche Entlüftungsöffnung 22g und eine abnehmbare obere Abdeckung 69 aufweist.

Die Abdeckung 69 kann lösbar angebracht sein und bei Überschreiten eines Grenzdrucks durch einen wirkenden Innendruck entfernt werden, wodurch die Gewichtselemente 40g, 42g, 43g, 45-47g, 39g, 41g, 44g nach oben hin in der Art eines Notauswurfs ausgeworfen werden können. Vorteilhaft kann bei Überschreiten des Grenzdrucks eine Beschädigung des Speicherkraftwerks 1g verhindert werden.

Denkbar ist, dass in einem Bereich der Abdeckung 69 eine Positionsfeststelleinrichtung, die eine Lichtschranke aufweisen kann, angeordnet ist. Eine kritische Position von Gewichtselemente 44g-47g kann festgestellt werden.

Wird beispielsweise eine obere Lichtschranke der Positionsfeststelleinrichtung ausgelöst, wurde eine kritische Position überschritten und die abnehmbare Abdeckung 69 kann entfernt werden, um eine Kollision mit den Gewichtselementen zu verhindern. Vorteilhaft wird eine Sicherung gegen eine Beschädigung des Speicherkraftwerks 1g geschaffen.

Ein in Fig. 8g ausschnittsweise in einer geschnittenen Seitenansicht schematisch gezeigtes Speicherkraftwerk 1g unterscheidet sich von denjenigen in Fig. 6a, 8a bis 8f gezeigten dadurch, dass das Speicherkraftwerk 1g eine in ihrer Größe veränderbare Entlüftungsöffnung 70 in der Art einer Luke aufweist. Deren Öffnungsgröße kann innendruckabhängig gesteuert werden.

Vorteilhaft kann bei einem zu starken Anstieg des Innendrucks ein gesteuerter oder geregelter Druckabbau erfolgen.

Obwohl in keiner der Figuren 1 bis 8 gezeigt, ist denkbar, dass Überdruckventile oder Ventile einer Ventileinrichtung eine Filtereinrichtung aufweisen, die zum Herausfiltern von festen Bestandteilen aus einem bei der Explosion eines Betriebsstoffes entstehenden Gases eingerichtet sind. Vorteilhaft wird eine Verschmutzung der Druckspeicherbehälter verhindert und gleichzeitig sichergestellt, dass eine Turbine mit sauberem Explosionsgas betreibbar ist.

Es versteht sich, dass eine in Fig. 1 bis 8 nicht gezeigte Entlüftungsleitung mit einem regelbaren Entlüftungsventil für eine Gasgeneratorkammer vorgesehen sein kann.

Es versteht sich außerdem, dass sämtliche mögliche Kombinationen von Merkmalen der in Fig. 1 bis 8 gezeigten Merkmale denkbar sind.

Beispielsweise kann ein in Fig. 1c gezeigtes Speicherkraftwerk eine Wärmetauscheinrichtung gemäß Fig. 1b aufweisen oder ein Speicherkraftwerk 1a gemäß Fig. 2 kann eine Wärmetauscheinrichtung gemäß Fig. 1b aufweisen oder ein in Fig. 7a gezeigtes Speicherkraftwerk eine abnehmbare Abdeckung gemäß Fig. 8f umfassen.

## Patentansprüche

1. Speicherkraftwerk (1-1c), insbesondere Druckspeicherkraftwerk, das eine Gasgeneratorkammer (2-2b) und eine mit der Gasgeneratorkammer fluidisch verbundene, mindestens einen Druckspeicher (5-5b, 7-7b, 8-8b; 8c) umfassende Druckspeichervorrichtung (6; 6b) aufweist, wobei die Gasgeneratorkammer (2-2b) dazu eingerichtet ist, als Explosionskammer zu wirken, in der ein Betriebsstoff (3-3b), mit dem das Speicherkraftwerk betrieben wird, zur Explosion gebracht wird, wobei der mindestens eine Druckspeicher (5-5b, 7-7b, 8-8b; 8c) der Druckspeichervorrichtung (6; 6b) zur Aufnahme eines in der Gasgeneratorkammer (2-2b) durch die Explosion des Betriebsstoffes (3-3b) erzeugten Explosionsgases (21) eingerichtet ist,
**dadurch gekennzeichnet,**
**dass** in der Gasgeneratorkammer (2-2b) ein Dämpfungsmittel angeordnet ist, das einen bewegbaren Kolben (18; 18d; 18f; 18g) umfasst, durch dessen Bewegung ein Volumen der Gasgeneratorkammer (2-2b) veränderbar ist.

2. Speicherkraftwerk nach Anspruch 1,
**dadurch gekennzeichnet,**
**dass** die Gasgeneratorkammer (2-2b) eine Ventileinrichtung mit mindestens einem Überdruckventil aufweist, durch die das bei der Explosion des Betriebsstoffes erzeugte Explosionsgas in den mindestens einen fluidisch mit der Gasgeneratorkammer (2-2b) verbundenen Druckspeicher (5-5b, 7-7b, 8-8b; 8c) der Druckspeichervorrichtung (6; 6b) hindurchströmen kann.

3. Speicherkraftwerk Anspruch 1,
**dadurch gekennzeichnet**,
die Gasgeneratorkammer (2-2b) eine Ventileinrichtung mit mindestens einem steuerbaren Ventil aufweist, dessen Ansteuerung mit der Explosion des Betriebsstoffes (3-3b) synchronisiert ist.

4. Speicherkraftwerk nach einem der Ansprüche 1 bis 3,
**dadurch gekennzeichnet,**
**dass** der mindestens eine Druckspeicher (5-5b, 7-7b, 8-8b; 8c) der Druckspeichervorrichtung (6; 6b) in einer Umfangsrichtung um die Gasgeneratorkammer (2-2b) herum angeordnet ist, vorzugsweise vollständig in der Umfangsrichtung.

5. Speicherkraftwerk nach einem der Ansprüche 1 bis 4,
**dadurch gekennzeichnet,**
**dass** die Druckspeichervorrichtung (6; 6b) mehrere in Reihe geschaltete Druckspeicher (5-5b, 7-7b, 8-8b; 8c) umfasst, wobei ein letzter Druckspeicher (8-8b; 8c) zur Entnahme von bei der Explosion des Betriebsstoffes (3-3b) erzeugten Explosionsgases (21) eingerichtet ist.

6. Speicherkraftwerk nach einem der Ansprüche 1 bis 5,
**dadurch gekennzeichnet,**
**dass** die Druckspeichervorrichtung (6; 6b) mehrere in Reihe geschaltete Druckspeicher (5-5b, 7-7b, 8-8b; 8c) umfasst, wobei eine Temperatur eines jeden der Druckspeicher (5-5b, 7-7b, 8-8b; 8c) einstellbar ist.

7. Speicherkraftwerk nach einem der Ansprüche 1 bis 6,
**dadurch gekennzeichnet,**
**dass** das Speicherkraftwerk (1-1c) eine Wärmetauscheinrichtung (13) aufweist, die zumindest einen Wärmetauscher (14) umfasst, der um die Gasgeneratorkammer (2-2b) herum angeordnet ist.

8. Speicherkraftwerk nach Anspruch 1,
**dadurch gekennzeichnet,**
**dass** die Gasgeneratorkammer (2-2b) zumindest eine Durchgangsöffnung (25) in einer Wand (23) der Gasgeneratorkammer (2-2b) aufweist, die von dem Dämpfungsmittel in einer Grundstellung des Dämpfungsmittels überdeckt wird und in einer Arbeitsstellung des Dämpfungsmittels freiliegt.

9. Speicherkraftwerk nach einem der Ansprüche 1 bis 8,
**dadurch gekennzeichnet,**
**dass** die Gasgeneratorkammer (2-2b) eine Entlüftungsleitung (26) aufweist, die die Gasgeneratorkammer (2-2b) mit einem letzten Druckspeicher (8-8c) oder einem der letzten Druckspeicher einer Druckspeichervorrichtung (6; 6b), die mehrere in Reihe geschaltete Druckspeicher (5-5b, 7-7b, 8-8b; 8c) umfasst, verbindet.

10. Verfahren zum Betrieb eines Speicherkraftwerks (1-1c), insbesondere eines Druckspeicherkraftwerks, bei dem in einer Gasgeneratorkammer (2-2b) des Speicherkraftwerks ein Betriebsstoff (3-3b), mit dem das Speicherkraftwerk (1-1c) betrieben wird, zur Explosion gebracht wird, wobei ein durch die Explosion des Betriebsstoffes (3-3b) in der Gasgeneratorkammer (2-2b) erzeugtes Explosionsgas (21) aus der Gasgeneratorkammer (2-2b) in mindestens einen Druckspeicher (5-5b, 7-7b, 8-8b; 8c) einer Druckspeichervorrichtung (6; 6b) geleitet wird,
**dadurch gekennzeichnet,**
**dass** durch einen Kolben (18; 18d; 18f; 18g) eines Dämpfungsmittels eine plötzliche Druckzunahme in der Gasgeneratorkammer (2a-2b) bei Explosion des Betriebsstoffes (2-2b) und einer daraus folgenden Erzeugung des Explosionsgases (21) gedämpft wird.

11. Verfahren nach Anspruch 10,
**dadurch gekennzeichnet,**
**dass** das durch die Explosion des Betriebsstoffes (3-3b) in der Gasgeneratorkammer (2-2b) erzeugte Explosionsgas (21) durch mehrere in Reihe geschaltete Druckspeicher (5-5b, 7-7b, 8-8b; 8c) einer Druckspeichervorrichtung (6; 6b) geleitet wird, wobei die in Reihe geschalteten Gasspeicher (5-5b, 7-7b, 8-8b; 8c) voneinander verschiedene Drücke aufweisen.

12. Verfahren nach Anspruch 11,
**dadurch gekennzeichnet,**
**dass** das durch die Explosion des Betriebsstoffes in der Gasgeneratorkammer (2-2b) erzeugte Explosionsgas (21) aus einem letzten der Druckspeicher (8-8c) zum Betrieb einer Turbine zur Stromerzeugung entnommen wird.

13. Verfahren nach einem der Ansprüche 10 bis 12,
**dadurch gekennzeichnet,**
**dass** ein jeder Druckspeicher (5-5b, 7-7b, 8-8b; 8c) mehrerer in Reihe geschalteter Druckspeicher einer Druckspeichervorrichtung (6; 6b) erwärmt wird.

14. Verfahren nach einem der Ansprüche 10 bis 13,
**dadurch gekennzeichnet,**
**dass** die Gasgeneratorkammer (2-2b) in den mindestens einen Druckspeicher (5-5b, 7-7b, 8-8b; 8c) hinein entlüftet wird.

## Claims

1. Storage power plant (1-1c), in particular pressure storage power plant, which comprises a gas generator chamber (2-2b) and a pressure storage device (6; 6b) fluidically connected to the gas generator chamber and comprising at least one pressure storage (5-5b, 7-7b, 8-8b; 8c), wherein the gas generator chamber (2-2b) is designed to act as an explosion chamber in which a fuel (3-3b) with which the storage power plant is operated is detonated, wherein the at least one pressure storage (5-5b, 7-7b, 8-8b; 8c) of the pressure storage device (6; 6b) is designed to store an explosion gas (21) generated in the gas generator chamber (2-2b) by the explosion of the fuel (3-3b),
**characterized in that**
a damping means is arranged in the gas generator chamber (2-2b), which damping means comprises a movable piston (18; 18d; 18f; 18g) by the movement of which a volume of the gas generator chamber (2-2b) is variable.

2. Storage power plant according to claim 1,
**characterized in that**
the gas generator chamber (2-2b) has a valve device with at least one pressure relief valve through which the explosion gas generated during the explosion of the fuel can flow into the at least one pressure storage (5-5b, 7-7b, 8-8b; 8c) of the pressure storage device (6; 6b), which pressure storage is fluidically connected to the gas generator chamber (2-2b).

3. Storage power plant according to claim 1,
**characterized in that**
the gas generator chamber (2-2b) has a valve device with at least one controllable valve, the activation of which is synchronized with the explosion of the fuel (3-3b).

4. Storage power plant according to one of claims 1 to 3,
**characterized in that**
the at least one pressure storage (5-5b, 7-7b, 8-8b; 8c) of the pressure storage device (6; 6b) is arranged in a circumferential direction around the gas generator chamber (2-2b), preferably completely in the circumferential direction.

5. Storage power plant according to any one of claims 1 to 4,
**characterized in that**
the pressure storage device (6; 6b) comprises a plurality of pressure storages (5-5b, 7-7b, 8-8b; 8c) connected in series, wherein a last pressure storage (8-8b; 8c) is arranged for extracting explosion gas (21) generated during the explosion of the fuel (3-3b).

6. Storage power plant according to one of claims 1 to 5,
**characterized in that**
the pressure storage device (6; 6b) comprises a plurality of pressure storages (5-5b, 7-7b, 8-8b; 8c) connected in series, wherein a temperature of each of the pressure storages (5-5b, 7-7b, 8-8b; 8c) is adjustable.

7. Storage power plant according to one of claims 1 to 6,
**characterized in that**
that the storage power plant (1-1c) has a heat exchange device (13) comprising at least one heat exchanger (14) arranged around the gas generator chamber (2-2b).

8. Storage power plant according to claim 1,
**characterized in that**
the gas generator chamber (2-2b) has at least one through-opening (25) in a wall (23) of the gas generator chamber (2-2b), which through-opening is covered by the damping means in a initial position of the damping means and is exposed in an operating position of the damping means.

9. Storage power plant according to one of claims 1 to 8,
**characterized in that**
the gas generator chamber (2-2b) has a vent line (26) which connects the gas generator chamber (2-2b) to a last pressure storage (8-8c) or one of the last pressure storages of a pressure storage device (6; 6b), which pressure storage device comprises a plurality of pressure storages (5-5b, 7-7b, 8-8b; 8c) connected in series.

10. Method for operating a storage power plant (1-1c), in particular a pressure storage power plant, in which in a fuel (3-3b) with which the storage power plant (1-1c) is operated, is detonated in a gas generator chamber (2-2b) of the storage power plant, wherein an explosion gas (21) generated by the explosion of the fuel (3-3b) in the gas generator chamber (2-2b) is conveyed from the gas generator chamber (2-2b) into at least one pressure storage (5-5b, 7-7b, 8-8b; 8c) of a pressure storage device (6; 6b), **characterized in that**
a piston (18; 18d; 18f; 18g) of a damping means dampens a sudden increase in pressure in the gas generator chamber (2a-2b) in the event of an explosion of the fuel (2-2b) and a resulting generation of the explosion gas (21).

11. Method according to claim 10,
**characterized in that**
the explosion gas (21) generated by the explosion of the fuel (3-3b) in the gas generator chamber (2-2b) is conveyed through a plurality of pressure storages (5-5b, 7-7b, 8-8b; 8c) connected in series of a pressure storage device (6; 6b), wherein the gas storages (5-5b, 7-7b, 8-8b; 8c) connected in series have different pressures from one another.

12. Method according to claim 11,
**characterized in that**
the explosion gas (21) generated by the explosion of the fuel in the gas generator chamber (2-2b) is extracted from a last of the pressure storages (8-8c) for operating a turbine for generating electricity.

13. Method according to one of claims 10 to 12,
**characterized in that**
each pressure storage (5-5b, 7-7b, 8-8b; 8c) of a plurality of pressure storages connected in series of a pressure storage device (6; 6b) is heated.

14. Method according to one of claims 10 to 13,
**characterized in that**
the gas generator chamber (2-2b) is vented into the at least one pressure storage (5-5b, 7-7b, 8-8b; 8c).

## Revendications

1. Centrale de stockage (1-1c), en particulier centrale de stockage sous pression, qui comprend une chambre de générateur de gaz (2-2b) et un dispositif de stockage sous pression (6; 6b) relié fluidiquement à la chambre de générateur de gaz et comprenant au moins un réservoir sous pression (5-5b, 7-7b, 8-8b; 8c), la chambre de générateur de gaz (2-2b) étant conçue pour agir comme une chambre d'explosion dans laquelle un carburant (3-3b) utilisé pour faire fonctionner la centrale de stockage est détoné, au moins un réservoir sous pression (5-5b, 7-7b, 8-8b; 8c) du dispositif de stockage sous pression (6; 6b) étant conçu pour stocker un gaz d'explosion (21) généré dans la chambre de générateur de gaz (2-2b) par l'explosion du carburant (3-3b),
**caractérisé en ce que**
un moyen d'amortissement est disposé dans la chambre de générateur de gaz (2-2b), lequel comprend un piston mobile (18; 18d; 18f; 18g) dont le mouvement permet de faire varier un volume de la chambre de générateur de gaz (2-2b).

2. Centrale de stockage selon la revendication 1,
**caractérisée en ce que**
la chambre de générateur de gaz (2-2b) est équipée d'un dispositif de soupape comprenant au moins une soupape de décharge de pression à travers laquelle le gaz d'explosion généré lors de l'explosion du carburant peut s'écouler dans au moins un réservoir sous pression (5-5b, 7-7b, 8-8b; 8c) du dispositif de stockage sous pression (6; 6b), ce réservoir sous pression étant relié fluidiquement à la chambre de générateur de gaz (2-2b).

3. Centrale de stockage selon la revendication 1,
**caractérisée en ce que**
la chambre de générateur de gaz (2-2b) est équipée d'un dispositif de soupape comprenant au moins une soupape contrôlable, dont l'activation est synchronisée avec l'explosion du carburant (3-3b).

4. Centrale de stockage selon l'une des revendications 1 à 3,
**caractérisée en ce que**
au moins un réservoir sous pression (5-5b, 7-7b, 8-8b; 8c) du dispositif de stockage sous pression (6; 6b) est disposé dans une direction circonférentielle autour de la chambre de générateur de gaz (2-2b), de préférence complètement dans la direction circonférentielle.

5. Centrale de stockage selon l'une des revendications 1 à 4,
**caractérisée en ce que**
le dispositif de stockage sous pression (6; 6b) comprend une pluralité de réservoirs sous pression (5-5b, 7-7b, 8-8b; 8c) connectés en série, un dernier réservoir sous pression (8-8b; 8c) étant prévu pour extraire le gaz d'explosion (21) généré lors de l'explosion du carburant (3-3b).

6. Centrale de stockage selon l'une des revendications 1 à 5,
**caractérisée en ce que**
le dispositif de stockage sous pression (6; 6b) comprend une pluralité de réservoirs sous pression (5-5b, 7-7b, 8-8b; 8c) connectés en série, la température de chacun des réservoirs sous pression (5-5b, 7-7b, 8-8b; 8c) étant réglable.

7. Centrale de stockage selon l'une des revendications 1 à 6,
**caractérisée en ce que**
la centrale de stockage (1-1c) dispose d'un dispositif d'échange thermique (13) comprenant au moins un échangeur de chaleur (14) disposé autour de la chambre de générateur de gaz (2-2b).

8. Centrale de stockage selon la revendication 1,
**caractérisée en ce que**
la chambre de générateur de gaz (2-2b) possède au moins une ouverture traversante (25) dans une paroi (23) de la chambre de générateur de gaz (2-2b), cette ouverture traversante étant couverte par le moyen d'amortissement dans une position initiale du moyen d'amortissement et exposée dans une position de fonctionnement du moyen d'amortissement.

9. Centrale de stockage selon l'une des revendications 1 à 8,
**caractérisée en ce que**
la chambre de générateur de gaz (2-2b) est équipée d'une conduite de ventilation (26) qui relie la chambre de générateur de gaz (2-2b) à un dernier réservoir sous pression (8-8c) ou à l'un des derniers réservoirs sous pression d'un dispositif de stockage sous pression (6; 6b), ce dispositif de stockage sous pression comprenant une pluralité de réservoirs sous pression (5-5b, 7-7b, 8-8b; 8c) connectés en série.

10. Procédé de fonctionnement d'une centrale de stockage (1-1c), en particulier d'une centrale de stockage sous pression, dans lequel un carburant (3-3b) utilisé pour faire fonctionner la centrale de stockage (1-1c) est détoné dans une chambre de générateur de gaz (2-2b) de la centrale de stockage,
dans lequel un gaz d'explosion (21) généré par l'explosion du carburant (3-3b) dans la chambre de générateur de gaz (2-2b) est transporté depuis la chambre de générateur de gaz (2-2b) vers au moins un réservoir sous pression (5-5b, 7-7b, 8- 8b; 8c) d'un dispositif de stockage sous pression (6; 6b),
**caractérisé en ce que**
un piston (18; 18d; 18f; 18g) d'un moyen d'amortissement amortit une augmentation soudaine de pression dans la chambre de générateur de gaz (2a-2b) lors de l'explosion du carburant (2-2b) et de la génération du gaz d'explosion (21) qui en résulte.

11. Procédé selon la revendication 10,
**caractérisé en ce que**
le gaz d'explosion (21) généré par l'explosion du carburant (3-3b) dans la chambre de générateur de gaz (2-2b) est transporté à travers une pluralité de réservoirs sous pression (5-5b, 7-7b, 8-8b; 8c) connectés en série dans un dispositif de stockage sous pression (6; 6b), les réservoirs sous pression (5-5b, 7-7b, 8-8b; 8c) connectés en série ayant des pressions différentes.

12. Procédé selon la revendication 11,
**caractérisé en ce que**
le gaz d'explosion (21) généré par l'explosion du carburant dans la chambre de générateur de gaz (2-2b) est extrait d'un dernier des réservoirs sous pression (8- 8c) pour faire fonctionner une turbine destinée à produire de l'électricité.

13. Procédé selon l'une des revendications 10 à 12,
**caractérisé en ce que**
chaque réservoir sous pression (5-5b, 7-7b, 8-8b; 8c) d'une pluralité de réservoirs sous pression connectés en série dans un dispositif de stockage sous pression (6; 6b) est chauffé.

14. Procédé selon l'une des revendications 10 à 13,
**caractérisé en ce que**
la chambre de générateur de gaz (2-2b) est ventilée dans au moins un réservoir sous pression (5-5b, 7-7b, 8-8b; 8c).
